# EUROPEAN PATENT APPLICATION

(11) **EP 4 647 396 A1**
(43) Date of publication of application: **12.11.2025**
(21) Application number: 25305633.7
(22) Date of filing: 02.05.2025
(51) Int. Cl.: C01B 3/38, C01B 3/48, C10J 3/00, C10J 3/84, C10K 1/00, C10K 1/04, C10K 1/08, C10K 3/00, C10K 3/02, C10K 3/04, C10K 3/06, C25B 1/04

(54) **REFORMER INTEGRATED GASIFICATION FOR PRODUCING HYDROGEN**

(30) Priority: 03.05.2024 FR 2404688
(71) Applicant: Technip Energies France, 92741 Nanterre Cedex (FR)
(72) Inventor: ROY, Sukla, 92741 Nanterre Cedex (FR); PORICHHA, Gaurav Kumar, 92741 Nanterre Cedex (FR)
(74) Representative: Edson, Russell Gregory

(57) **Abstract**

There is described a hydrogen production system comprising: a gasification sub-system to produce a syngas stream from a biomass and/or refuse derived fuel feed stream; and a steam methane reformer (SMR) sub-system to produce an SMR syngas stream from a hydrocarbon feed, and to produce a low carbon hydrogen final product by integrating the syngas stream from the gasification sub-system and the SMR syngas stream.

## Description

### Field

The disclosure relates to a hydrogen production system and methods of operating such a system. This system integrates the use of synthesis gas (also referred to as "syngas") generated from a gasification system with syngas from a steam methane reformer (SMR) system to produce low carbon hydrogen. Integrating the two systems can enhance low carbon hydrogen generation by reducing the dependency on fossil fuel, thus reducing carbon footprint.

### Background

A hydrogen production facility can produce hydrogen from fossil fuel (hydrocarbon fuel) or non-fossil fuel (biomass or refuse derived fuel) using a variety of processes.

Hydrogen produced from biomass by gasification is considered as green hydrogen. Hydrogen produced from refuse derived fuel (RDF) by gasification is considered as low carbon hydrogen. The biomass or RDF feed is gasified in the presence of oxygen or air and/or steam to produce syngas. The syngas can include hydrogen (H2), carbon monoxide (CO), and other substances such as methane, water, carbon dioxide (CO2), carbonyl sulfide (COS) and hydrogen sulfide (H2S). The syngas can be treated to remove or significantly reduce impurities such as H2S, COS and CO2, before being used in downstream processes.

Steam methane reforming (SMR) is used for producing hydrogen from a hydrocarbon feed such as natural gas, naphtha, liquified petroleum gas, refinery off-gas, etc., often containing predominantly methane. The purified hydrocarbon feed is reformed with steam in the presence of a catalyst in a steam methane reformer to generate syngas, containing mainly CO, H2, and other substances like CO2, methane, and water.

Syngas can be passed through a water-gas shift reaction to increase the H2 content. High purity hydrogen is produced when shifted syngas is passed through a pressure swing adsorption (PSA) unit.

### Summary

In a first aspect, a hydrogen production system is provided that includes a gasification sub-system usable to produce an output syngas stream from a biomass and/or RDF feed stream. The hydrogen production system also includes a steam methane reformer (SMR) sub-system to produce an SMR syngas stream from a hydrocarbon feed and to produce a hydrogen final product by integrating the syngas stream from the gasification sub-system and the SMR syngas stream.

Integrating the syngas occurs by taking the syngas output of the gasification sub-system and the SMR sub-system and then combining the further processing of the syngas streams to enhance the production of hydrogen. This can include combining the two syngas streams at multiple points and using different process steps for different parts of the streams, as is further explained in the detailed description. Integrating syngas from two technologies (gasification and SMR) can enhance the reliability of hydrogen generation based on the availability of fossil based or low carbon-based feedstock. It can also reduce the dependency on fossil feed and simultaneously help in reduction of the carbon footprint.

The biomass is organic matter derived from living organisms, primarily plants, that can be used to produce energy. It is a renewable energy source which is a sustainable alternative to fossil fuels.

RDF is a fuel derived from refuse as would be known to the skilled reader. Refuse can include various types of waste materials, including the non-recyclable portions of municipal solid waste (also known as trash or garbage) and non-recyclable plastics. RDF can be prepared by processing the refuse, e.g. by removing non-combustible material and then by shredding, drying, pelletizing or briquetting of the remaining combustible portion to prepare it for use, for example, for gasification.

The syngas produced by the gasification sub-system and the steam methane reformer sub-system can include hydrogen (H2), carbon monoxide (CO), and other substances such as methane, water, carbon dioxide (CO2), carbonyl sulfide (COS) and hydrogen sulfide (H2S).

The hydrogen final product is the pure or substantially pure hydrogen that is the end product from processing of the syngas streams. This hydrogen final product may be more than 95%, more than 96%, more than 97%, more than 98%, more than 99%, more than 99.9%, or more than 99.99% hydrogen.

In any embodiment, the gasification sub-system may include a gasification unit to gasify a carbonaceous feed stream to produce raw syngas. Gasification may take place in the presence of air, oxygen and/or steam. The gasification sub-system may also include a tar removal unit to produce a tar-free syngas stream from the raw syngas. The gasification sub-system may also include a syngas cleaning section to produce treated syngas from the tar-free syngas. The gasification sub-system may also include a CO2 removal section to remove CO2 from the syngas to make the syngas composition more suitable for hydrogen production. The gasification sub-system may also include a gasification shift conversion section to produce the syngas stream with enhanced hydrogen composition from the treated syngas and to provide the syngas stream to the SMR sub-system. External steam may be used in the gasification shift conversion section.

In any embodiment, the SMR sub-system may include a de-sulfurization and feed purification unit to produce a desulfurized feed stream from the hydrocarbon feed stream. This may be in the presence of recycled hydrogen. The SMR sub-system may also include a reforming section to produce hot syngas from the desulfurized feed stream. The desulfurized feed stream may be reformed with steam at a high temperature in the presence of a catalyst to produce syngas. The SMR sub-system may also include a heat recovery boiler to produce SMR syngas from the hot syngas. The heat recovery boiler may be used to produce high pressure steam from boiler feed water utilizing waste heat from the hot syngas. This also helps to cool down the syngas to the desired temperature for the shift conversion section. The SMR sub-system may also include a first shift conversion section to produce a hydrogen and carbon dioxide stream from the SMR syngas. The SMR sub-system also includes a second shift conversion section to produce shifted syngas from the hydrogen and carbon dioxide stream and from the output syngas stream from the gasification sub-system. The SMR sub-system also includes a heat recovery and condensation unit to produce process gas from the shifted syngas. This unit also cools down the shifted syngas to a desired temperature before entering into a pressure swing adsorption unit. The SMR sub-system also includes a hydrogen pressure swing adsorption (PSA) unit to generate the hydrogen product from the shifted syngas.

Having two shift conversion sections allows the hydrogen production system to contain increased integration between the gasification sub-system and the SMR sub-system as it allows additional places where the gasification sub-system can be coupled with the SMR sub-system. It also allows more efficient shift conversion as the two shift conversion sections can have different reaction conditions, e.g. different temperatures, compositions, etc.

In any embodiment, an output of the gasification shift conversion section may be coupled to an input of the second shift conversion section to provide the output syngas stream to the second shift conversion section. This allows the syngas to go through two shift conversion sections which increases reaction efficiency.

In any embodiment, an output of the syngas cleaning section may be coupled to an input of the first shift conversion section to provide the treated syngas from the gasification sub-system to the first shift conversion section of the SMR sub-system. This allows the syngas to go through two shift conversion sections which increases reaction efficiency. Where a CO2 removal section is present after the syngas cleaning section, an output of the CO2 removal section may be coupled to an input of the first shift conversion section to provide the treated syngas from the gasification sub-system to the first shift conversion section of the SMR sub-system.

Where the hydrogen production system comprises two different routes for the syngas from the gasification sub-system to pass through the three shift conversion sections, this helps to increase the process efficiency.

In any embodiment, the hydrogen production system may include, optionally as part of the gasification sub-system, a water electrolysis unit to provide oxygen for the gasification process to produce the syngas stream from the biomass and/or RDF feed stream.

In any embodiment, the hydrogen production system may include, optionally as part of the gasification sub-system, an electrolysis unit to provide hydrogen for the production of other components in the gasification sub-system. For example, the hydrogen may be used with CO2 removed from the syngas in the gasification sub-system (e.g. in a CO2 removal section) to produce methanol, ethanol and/or dimethyl ether. Hydrogen from the SMR sub-system (e.g. from the PSA unit) may also be used for this process. This helps in the reduction of the CO2 footprint by generating low carbon fuels/chemicals utilizing low carbon hydrogen and utilizing bio-/low carbon CO2.

In any embodiment, the gasification sub-system may include an air separation unit to supply air or oxygen to the gasification unit. Nitrogen may also be produced from the air separation unit, e.g. for use in ammonia production.

In any embodiment, the hydrogen production system may include, optionally as part of the gasification sub-system, an ammonia-producing unit which is useable to convert hydrogen from the hydrogen production system and nitrogen from the gasification sub-system (e.g. from the air separation unit) to produce ammonia. The hydrogen may come from the gasification sub-system and/or the SMR sub-system. In particular, the hydrogen may come from the electrolysis unit of the gasification sub-system and/or the PSA unit of the SMR sub-system.

The hydrogen production system may include, optionally as part of the gasification sub-system, a urea-producing unit which is useable to convert the ammonia from the ammonia-producing unit and CO2 recovered from the syngas in the gasification sub-system to produce urea. This also helps to reduce the release of CO2, a greenhouse gas.

In any embodiment, the gasification sub-system may include a gasification heat recovery boiler and steam generation section to generate steam from boiler feed water utilizing waste heat from the gasification sub-system. The generated steam can be used as a gasification agent and/or to carry out shift reaction. Boiler feed water is generated from demineralized water from a battery limit after deaeration.

In any embodiment, the SMR sub-system may include an SMR heat recovery boiler and steam generation system to generate steam from boiler feed water utilizing waste heat from SMR process gas and flue gas. The generated steam can be superheated and saturated/superheated steam used in the reforming section, and/or as a gasification agent and/or to carry out shift reaction and excess superheated steam can be exported to battery limit. Boiler feed water is generated from process condensate after degasification, to meet boiler feed water requirement, make-up demineralized water taken from the battery limit.

In any embodiment, the hydrogen production system may be usable to produce methanol, ethanol, dimethyl ether, urea, and ammonia.

In any embodiment, the hydrogen product may be produceable from the biomass and/or RDF feed stream and the hydrocarbon feed stream.

In any embodiment, the SMR sub-system may be usable to produce tail gas which is useable as reformer fuel, as fuel header and/or as feed for CO2 removal.

In embodiments described herein, the terms "feedstock", "feed" and "feed stream" are used, for example, a hydrocarbon feedstock, hydrocarbon feed, hydrocarbon feed stream, biomass feed stream, RDF feed stream, etc. These terms will be understood by a skilled person. These terms can generally be understood to mean the following: a "feedstock" may generally refer to the physical material itself; a "feed" is the material that is fed into or out of a device or apparatus, such as a reactor, processor, etc.; and a "feed stream" is a stream or supply of the material that is fed into or out of a device or apparatus, such as a reactor, processor, etc.

In another embodiment, there is a method that includes producing, by a gasification sub-system, an output syngas stream from a biomass and/or RDF feed stream. The method also includes producing, by a steam methane reformer (SMR) sub-system integrated with the gasification sub-system in a hydrogen production facility, a hydrogen product using the output syngas stream from the gasification sub-system and using a hydrocarbon feed stream.

In another aspect, there is provided a gasification system comprising a gasification unit to gasify a biomass and/or RDF feed stream to produce raw syngas; a tar removal unit to produce a tar-free syngas stream from the raw syngas; a syngas cleaning section to produce treated syngas from the tar-free syngas; and a gasification shift conversion section to produce a shifted-syngas stream with enhanced hydrogen composition from the treated syngas.

In any embodiment, the gasification system includes a CO2 removal unit to remove CO2 from the syngas before the gasification shift conversion section.

In any embodiment, the gasification system may include an electrolysis unit to provide oxygen for the production of the syngas stream from the biomass and/or RDF feed stream.

In any embodiment, the gasification system may include an electrolysis unit to provide hydrogen which is usable with CO2 removed from the syngas in the gasification system to produce methanol, ethanol and/or dimethyl ether.

In any embodiment, the gasification system may include an ammonia-producing unit which is useable to convert hydrogen and nitrogen from the gasification system to produce ammonia.

In any embodiment, the gasification system may include a urea-producing unit which is useable to convert the ammonia from the ammonia-producing unit and CO2 removed from the syngas in the gasification system to produce urea.

In any embodiment, the gasification system may include a gasification heat recovery boiler to provide steam for at least some other components of the gasification system using water from a battery limit.

In any embodiment, the gasification system may be usable to produce methanol, ethanol, dimethyl ether, carbon dioxide, urea, and ammonia.

Further features of the gasification system are as described for the gasification sub-system of the hydrogen production system.

### Detailed Description

Certain aspects and features of the present disclosure relate to a hydrogen-producing plant that integrates syngas from a biomass and/or RDF gasification section and syngas from a steam methane reformer-based hydrogen generation unit by utilizing hydrocarbon feedstock. Integrating syngas from a gasification section with syngas from a steam methane reformer (SMR) generation unit can reduce the dependency on fossil feed and fuel, which contributes to reducing a carbon footprint.

Some features of the present disclosure can address waste management issues that are concerns for environmental pollution (for instance, agricultural waste being burned and industrial, commercial and municipal waste dumped in a landfill). Integrating a gasifier with a SMR-based hydrogen plant allows either new or existing infrastructure to process and purify syngas produced from carbon neutral feed like biomass and/or RDF gasifier. The use of biomass and/or RDF in gasifiers reduces greenhouse gas (e.g., CO2, methane, etc.) emissions. The process converts waste into valuable products (H2/syngas) in a cleaner and cost-effective way, hence reducing carbon footprint of conventional fossil fuel based SMR Hydrogen Generation Unit in refineries.

A gasifier according to some examples can receive feedstock that includes biomass and/or RDF that has been conditioned to a desired quality. The feedstock fed into the gasifier can be gasified to produce syngas and by-products, such as char/biochar/slag. The syngas generated by the gasifier can be cleaned and conditioned to remove impurities to prevent contaminating downstream systems.

An SMR according to some examples can receive fossil fuel feed, such as naphtha, natural gas, liquified petroleum gas, refinery off-gas etc. The SMR can reform the feed with steam in a reformer to generate syngas. The syngas can be sent to shift reactors to enhance the quality of hydrogen in the syngas. The hydrogen that is generated in the process can be purified in a pressure swing adsorber (PSA) to produce pure or substantially pure hydrogen, such as up to 99.99% pure hydrogen (H2).

A gasifier and SMR can independently produce hydrogen. Hydrogen produced by the gasifier may be considered low-carbon hydrogen. Hydrogen produced by the SMR can produce hydrogen that is considered grey hydrogen or blue hydrogen, depending on the carbon-dioxide (CO2) capture implementation. A system according to some examples of the present disclosure can integrate syngas generated by a gasifier with syngas generated from an SMR to produce hydrogen from the combined syngas. In some examples, an SMR facility (e.g. an existing facility) can be used with a gasifier. In other instances, an integrated system can be implemented in a new hydrogen production facility.

By integrating a gasifier with an SMR to allow syngas produced from each to be used to produce hydrogen, the reliability of hydrogen generation can be enhanced via gasification as well as reforming based on the availability of fossil-based or low-carbon-based feedstock. And the dependency on fossil feed and fuel can be reduced to reduce carbon footprint. Biomass- and/or RDF-based gasification may produce more hydrogen per kilowatt when compared to other existing green hydrogen techniques. In some examples, the gasifier and SMR can be standardized as modular design and include a flexible feed handling configuration that is a plug and play model to integrate with SMR plants for low-carbon hydrogen production.

In one example, one or more modules that include pre-treatment, gasifier, and syngas cleaning capabilities can receive biomass and/or RDF and produce a syngas that can be processed by integrating with systems downstream of an SMR to produce hydrogen.

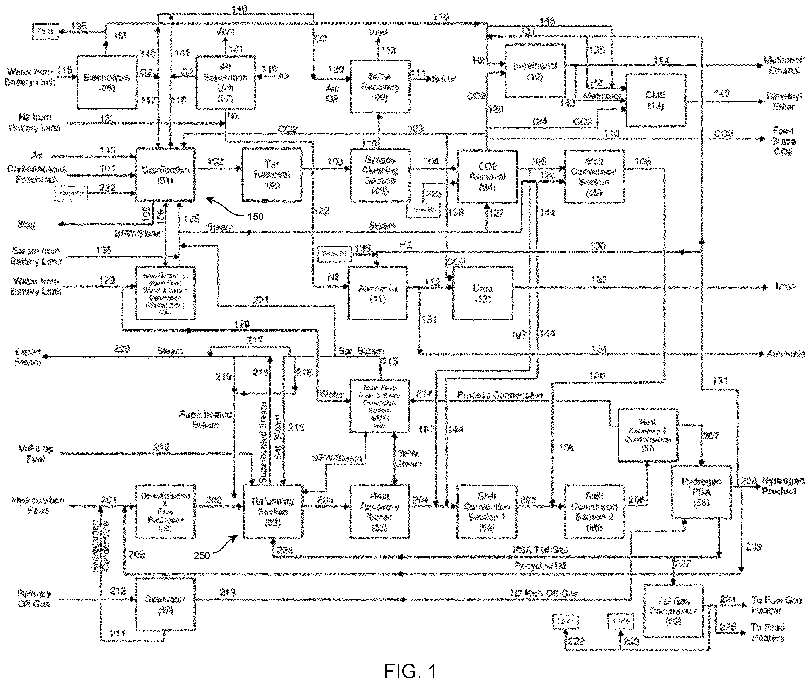

FIG. 1 is a block diagram of a hydrogen production facility according to one example of the present disclosure.

Pre-treated carbonaceous feedstock 101, such as biomass and/or RDF, can be fed to a gasification unit 01 to undergo a gasification process to produce a raw syngas stream 102. Any type of gasifier can be used for the gasifier unit 01. As an example, the type of gasifier used can range from fixed bed to fluidized bed to entrained flow gasifiers to sandwich gasifiers. One or combination of steam 125, oxygen 117/118, or air 145 can be used as gasification agents. Steam can be provided by a steam generation system utilizing waste heat from heat recovery/boiler feed/water and steam generation (gasification) 08, steam 221 from SMR unit 58, or steam from battery limit 136. The oxygen 118 used in the process can be provided by an air separation unit (ASU) 07. In some examples, oxygen 117 from a water electrolysis unit 06 can be used.

In some examples of a gasification process, the syngas may contain substantial amount of hydrogen (H2), carbon monoxide (CO), lesser quantities of methane (CH4), water (H2O), carbon dioxide (CO2), carbonyl sulfide (COS), hydrogen sulfide (H2S), halides, etc. Impurities in syngas may contaminate or poison downstream catalysts. The syngas can be treated to remove or significantly reduce impurities such as H2S, COS, halides, and CO2, before being utilized in downstream processes. If the raw syngas stream 102 from the gasification unit 01 has considerable amount of tar, then tar can be removed using a tar removal unit 02 that can implement one or more tar removal methods, including dry techniques, wet techniques, or a combination. Examples of dry techniques can include catalytic cracking, thermal cracking, and plasma cracking. Examples of wet techniques can include water or oil scrubbers. The output stream 103 can be provided to a syngas cleaning section 03 to implement other cleaning techniques to remove particulate matter, halides, sulfur, etc. Sulphur 110 captured from the syngas cleaning section 03 can be provided to a sulfur recovery unit 09, with for example air/O2 120 from a stream 140 from the electrolysis unit 01 or air separation unit 07, for further treatment and preparation for storage or disposal.

Syngas 104 from the syngas cleaning section 03 can be fed into a CO2 removal unit 04 to process the syngas into lean CO2 syngas for use in downstream integration purposes with an SMR hydrogen unit. The CO2 removal unit 04 can use steam 127 from unit 08 and gas 223 from tail gas compressor unit 60 to process the syngas. CO2 lean syngas 105 can then be mixed with steam 126 and be fed into a shift conversion section 05 to enhance H2 composition in the syngas. For example, a major portion of CO can react with steam to generate hydrogen and carbon dioxide.

As described above, the gasification sub-system 150 comprises at least a gasification unit 01. The gasification sub-system 150 can also include one or more of a tar removal unit 02, a syngas cleaning section 03, a CO2 removal unit 04, and a shift conversion section 05. In some embodiments, the gasification sub-system can also include one or more of a sulfur recovery unit 09, a water electrolysis unit 06, and an air separation unit 07. In certain embodiments, the gasification sub-system 150 can also include an ammonia-producing unit 11 and optionally a urea-producing unit 12.

A steam methane reforming (SMR) sub-system 250 can be used that includes desulfurization and feed purification 51, reforming section 52, heat recovery boiler 53, shift conversion section 1 54, and shift conversion section 2 55. In some examples, the SMR sub-system also includes heat recovery and condensation unit 57, hydrogen PSA 56, separator 59, and tail gas compressor 60. In other examples, these are separate units from the SMR.

A hydrocarbon feed 201, such as naphtha, natural gas, liquified petroleum gas (LPG), or a mixture of these or other hydrocarbon feeds, can be mixed with recycled hydrogen 209 and preheated and pretreated in de-sulfurization and feed purification unit 51 to remove impurities such as sulfur, halides, etc., to avoid poisoning a reforming catalyst. The desulfurized feed 202 can be mixed with steam 215/219 and reformed in the reforming section 52 using PSA tail gas 226 to produce hot syngas 203 containing CO, H2 and CO2. The hot syngas 203 from the reforming section 52 can be provided to heat recovery boiler 53 to recover heat to generate high pressure steam, and then the syngas is provided to shift conversion section 1 54 in which CO can react with steam at high temperatures over a suitable catalyst to form a stream 205 of H2 and CO2.

Syngas 106 from shift conversion section 05 can be combined with stream 205 that is an SMR-derived syngas at the downstream of SMR-shift conversion section 1 54. Based on the configuration of an inlet composition of the SMR-shift conversion section 1 54, syngas 107 can be provided from CO2 removal section 04 to the SMR Syngas 204 upstream of the SMR-shift conversation section 1 54. Some amount of steam 144 can also be added at inlet of SMR-shift conversation section 1 54.

To further increase H2 concentration in syngas, syngas 205 from shift conversion section 1 54 can be provided to shift conversion section 2 55. Shifted syngas 206 from shift conversion section 2 55 can provided to heat recovery section 57. The heat content of syngas leaving the shift sections can be recovered by heating up cold process and utility streams, and residual heat is removed in the syngas coolers. After that, condensate 214 from syngas can be separated and the cooled dried process gas 207 can be provided to hydrogen PSA 56 to produce pure or substantially pure hydrogen, e.g., up to 99.99%, hydrogen 208, as the final hydrogen product. Condensate 214 can be provided to boiler feed water and steam generation section 58 of the SMR to generate steam. Make-up water (e.g. raw water or demineralized water) 128 from battery limit can be used for steam generation purposes. Generated steam 215 can be used for reforming and gasification section, and excess steam 220 can be exported to the battery limit after superheating (e.g. utilizing waste heat from the reforming section).

Refinery off-gas 212 can be passed through a separator 59, where separated hydrocarbon condensate 211 can be routed to hydrocarbon feed 201 upstream of feed purification section 51 and H2-rich off gas 213 can be fed into hydrogen PSA 56 to recover hydrogen. Tail gas from PSA 226 can be used as the main fuel to reform section 52. The remaining fuel requirement of reforming section can be fulfilled by make-up fuel 210, such as Naphtha/NG/LPG/Fuel gas, etc. Reformer can operate at lower capacity, (e.g. while gasifier is in operation to meet hydrogen demand) and extra tail gas 227 can be compressed in tail gas compressor 60 and can be provided to refinery fuel header 224, used as fuel to heaters 225, provided to gasifier inlet 222 as fuel, or a combination of these or other uses. In case there is no requirement of tail gas to be used as fuel, compressed tail gas 223 can be provided to CO2 removal unit 04 to recover CO2 for further utilization.

As described above, the SMR sub-system 250 comprises at least a reforming section 52. The SMR sub-system 250 can also include one or more of a desulfurization and feed purification unit 51, a heat recovery boiler 53, shift conversion section 1 54, and shift conversion section 2 55. In some embodiments, the SMR sub-system may also include one or more of a heat recovery and condensation unit 57 and a hydrogen PSA 56. In some embodiments, the SMR sub-system may also include a separator 59 and a tail gas compressor 60. In some embodiments, one or more of the units 56, 57, 59 and 60 are separate units from the SMR sub-system 250.

In some examples of the present disclosure, other products, such as methanol, ethanol, ammonia, urea, and dimethyl ether (DME), can be co-produced with hydrogen. This can be achieved by using captured CO2 during syngas treatment, H2 produced from electrolysis unit 06 using water from battery limit 115, H2 from PSA 56, Nitrogen (N2) from air separation unit 07 processing air 119, or a combination of these and other processes. For example, a portion of the captured CO2 120 from CO2 removal unit 04 and H2 116/131 from electrolysis unit 06 or hydrogen PSA 56 can be used to produce methanol or ethanol 114. Another portion of CO2 124 and H2 146/136 can be used to produce dimethyl ether (DME) 143 using DME unit 13. DME 143 may also or alternatively be produced from methanol 142.

N2 122/137 from ASU 07 or from battery limit, and H2 130/135 from PSA 56 or electrolysis unit 06, can be used by an ammonia-producing unit 11 to produce ammonia 134. Ammonia stream 132 from the ammonia-producing unit 11 can be further used along with captured CO2 138 by a urea-producing unit 12 to produce Urea 133.

A portion of recovered CO2 113 from CO2 removal unit 04 can be routed for use in the food industry. A slip stream of CO2 123 from CO2 recovery unit can be recycled to a gasifier as carrier gas. Pure oxygen 117 from electrolysis unit 06 can also be used in gasifier 01.

Including the production of H2 and O2 in electrolysis unit 06 can avoid the requirement of an ASU and can contribute toward reducing the carbon footprint of the process.

Biomass is a carbon neutral feedstock and can help to produce green hydrogen using gasification process.

Using biomass and/or RDF in gasifiers can reduce greenhouse gas (e.g., CO2, Methane, etc.) emissions. The process can convert waste into products (e.g., H2 or syngas) in a cleaner and cost-effective way, to reduce the carbon footprint of using SMR hydrogen generation units in refineries.

The foregoing description of the disclosure, including illustrated aspects and examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of this disclosure. Aspects and features from each disclosed example may be combined with any other example.

## Claims

1. A hydrogen production system comprising:
a gasification sub-system to produce a syngas stream from a biomass and/or refuse derived fuel (RDF) feed stream; and
a steam methane reformer (SMR) sub-system to produce an SMR syngas stream from a hydrocarbon feed and to produce a hydrogen final product by integrating the syngas stream from the gasification sub-system and the SMR syngas stream.

2. The hydrogen production system of claim 1, wherein the gasification sub-system comprises:
a gasification unit to gasify a carbonaceous feed stream to produce raw syngas;
a tar removal unit to produce a tar-free syngas stream from the raw syngas;
a syngas cleaning section to produce treated syngas from the tar-free syngas; and
a gasification shift conversion section to produce the syngas stream that is a shifted-syngas stream with enhanced hydrogen composition from the treated syngas and to provide the syngas stream to the SMR sub-system.

3. The hydrogen production system of any of claims 1 or 2, wherein the SMR sub-system comprises:
a de-sulfurization and feed purification unit to produce a desulfurized feed stream from the hydrocarbon feed stream;
a reforming section to produce hot syngas from the desulfurized feed stream;
a heat recovery boiler to produce SMR syngas from the hot syngas;
a first shift conversion section to produce a hydrogen and carbon dioxide stream from the SMR syngas;
a second shift conversion section to produce shifted syngas from the hydrogen and carbon dioxide stream and from the syngas stream from the gasification sub-system;
a heat recovery and condensation unit to produce process gas from the shifted syngas; and
a hydrogen pressure swing adsorption unit to generate the hydrogen final product from the shifted syngas.

4. The hydrogen production system of claim 3, wherein an output of the gasification shift conversion section is coupled to an input of the second shift conversion section to provide the syngas stream to the second shift conversion section.

5. The hydrogen production system of claim 3 or 4, wherein an output of the syngas cleaning section is coupled to an input of the first shift conversion section to provide the treated syngas from the gasification sub-system to the first shift conversion section of the SMR sub-system.

6. The hydrogen production system of any of claims 1 to 5, wherein the gasification sub-system includes a CO2 removal unit to remove CO2 from the syngas before the gasification shift conversion section.

7. The hydrogen production system of any of claims 1 to 6, wherein the gasification sub-system includes a water electrolysis unit to provide oxygen for the production of the syngas stream from the biomass and/or RDF feed stream; and/or
wherein the gasification sub-system includes a water electrolysis unit to provide hydrogen which is usable with CO2 removed from the syngas in the gasification sub-system to produce methanol, ethanol and/or dimethyl ether.

8. The hydrogen production system of claim 7, wherein hydrogen from the SMR sub-system is usable with the hydrogen from the water electrolysis unit and CO2 from the syngas to produce methanol, ethanol and/or dimethyl ether.

9. The hydrogen production system of any of claims 1 to 7, wherein the gasification sub-system includes an ammonia-producing unit which is useable to convert hydrogen from the hydrogen production system and nitrogen from the gasification sub-system to produce ammonia;
optionally wherein the hydrogen comes from both the gasification sub-system and the SMR sub-system; and
optionally wherein the gasification sub-system includes a urea-producing unit which is useable to convert the ammonia from the ammonia-producing unit and CO2 removed from the syngas in the gasification sub-system to produce urea.

10. The hydrogen production system of any of claims 1 to 9, wherein:
i) the gasification sub-system includes a gasification heat recovery boiler to provide steam for at least some other components of the gasification sub-system using water from a battery limit;
ii) the SMR sub-system includes an SMR heat recovery boiler to provide steam for at least some other components of the SMR sub-system using the water from the battery limit;
iii) the gasification sub-system and SMR sub-system are usable to produce methanol, ethanol, dimethyl ether, carbon dioxide, urea, and ammonia; and/or
iv) the hydrogen product is produceable from the biomass and/or RDF feed stream and the hydrocarbon feed stream.

11. A method comprising:
producing, by a gasification sub-system, a syngas stream from a biomass and/or RDF feed stream; and
producing, by a steam methane reformer (SMR) sub-system integrated with the gasification sub-system in a hydrogen production facility, a hydrogen product using the syngas stream from the gasification sub-system and using a hydrocarbon feed stream.

12. A gasification system comprising:
a gasification unit to gasify a biomass and/or RDF feed stream to produce raw syngas;
a tar removal unit to produce a tar-free syngas stream from the raw syngas;
a syngas cleaning section to produce treated syngas from the tar-free syngas; and
a gasification shift conversion section to produce a shifted-syngas stream with enhanced hydrogen composition from the treated syngas.

13. The gasification system of claim 12, wherein the gasification system includes an electrolysis unit to provide oxygen for the production of the syngas stream from the biomass and/or RDF feed stream; and/or
wherein the gasification system includes an electrolysis unit to provide hydrogen which is usable with CO2 removed from the syngas to produce methanol, ethanol and/or dimethyl ether.

14. The gasification system of any one of claims 12 to 13, wherein the gasification system includes an ammonia-producing unit which is useable to convert hydrogen and nitrogen from the gasification system to produce ammonia;
optionally wherein the gasification system includes a urea-producing unit which is useable to convert the ammonia from the ammonia-producing unit and CO2 removed from the syngas in the gasification system to produce urea.

15. The gasification system of any one of claims 12 to 14, wherein the gasification system includes a gasification heat recovery boiler to provide steam for at least some other components of the gasification system using water from a battery limit; and/or
wherein the gasification system is usable to produce methanol, ethanol, dimethyl ether, carbon dioxide, urea, and ammonia.
